(19) Europäisches Patentamt / European Patent Office / Office européen des brevets

(11) **EP 3 780 376 B1**

(12) **EUROPEAN PATENT SPECIFICATION**

(45) Date of publication and mention of the grant of the patent:
**20.03.2024 Bulletin 2024/12**

(21) Application number: **19191475.3**

(22) Date of filing: **13.08.2019**

(51) International Patent Classification (IPC):
**H02M 7/483** $^{(2007.01)}$   **H02M 1/32** $^{(2007.01)}$

(52) Cooperative Patent Classification (CPC):
**H02M 7/483; H02M 1/32; H02M 7/4833; H02M 7/4835;** H02M 1/327

(54) **ENERGY STORAGE AND SEMICONDUCTOR RELATED SELECTION OF CELLS IN MODULAR MULTILEVEL POWER CONVERTERS AND COMPUTER PROGRAM**

ENERGIESPEICHER UND HALBLEITERBEZOGENE AUSWAHL VON ZELLEN IN MODULAREN MEHRSTUFIGEN STROMWANDLERN UND COMPUTERPROGRAMM

STOCKAGE D'ÉNERGIE ET SÉLECTION ASSOCIÉE À UN SEMICONDUCTEUR DE CELLULES DANS DES CONVERTISSEURS DE PUISSANCE MULTINIVEAU MODULAIRES ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.02.2021 Bulletin 2021/07**

(73) Proprietor: **Christian-Albrechts-Universität zu Kiel 24118 Kiel (DE)**

(72) Inventors:
- **ANDRESEN, Markus**
  **24116 Kiel (DE)**
- **HAHN, Frederik**
  **24143 Kiel (DE)**
- **LANGWASSER, Marius**
  **24106 Kiel (DE)**
- **LISERRE, Marco**
  **24248 Mönkeberg (DE)**

(74) Representative: **Kröncke, Rolf et al Meissner Bolte Patentanwälte Rechtsanwälte Partnerschaft mbB Plathnerstraße 3A 30175 Hannover (DE)**

(56) References cited:
**WO-A1-2018/099564      US-A1- 2015 171 726**

- **FREDERIK HAHN ET AL: "Thermal Analysis and Balancing for Modular Multilevel Converters in HVDC Applications", IEEE TRANSACTIONS ON POWER ELECTRONICS, vol. 33, no. 3, 1 March 2018 (2018-03-01), pages 1985-1996, XP055669036, USA ISSN: 0885-8993, DOI: 10.1109/TPEL.2017.2691012**
- **NAJMI VAHID ET AL: "High reliability capacitor bank design for modular multilevel converter in MV applications", 2014 IEEE ENERGY CONVERSION CONGRESS AND EXPOSITION (ECCE), IEEE, 14 September 2014 (2014-09-14), pages 1051-1058, XP032680744, DOI: 10.1109/ECCE.2014.6953515 [retrieved on 2014-11-11]**
- **FALCK JOHANNES ET AL: "Active methods to improve reliability in power electronics", IECON 2017 - 43RD ANNUAL CONFERENCE OF THE IEEE INDUSTRIAL ELECTRONICS SOCIETY, IEEE, 29 October 2017 (2017-10-29), pages 7923-7928, XP033277280, DOI: 10.1109/IECON.2017.8217389 [retrieved on 2017-12-15]**
- **HAHN FREDERIK ET AL: "Enhanced Current Capability for Modular Multilevel Converters by a Combined Sorting Algorithm for Capacitor Voltages and Semiconductor Losses", 2019 IEEE APPLIED POWER ELECTRONICS CONFERENCE AND EXPOSITION (APEC), IEEE, 17 March 2019 (2019-03-17), pages 3071-3077, XP033555109, DOI: 10.1109/APEC.2019.8722065 [retrieved on 2019-05-24]**

• **TANAKA TAKAAKI ET AL: "Asymmetrical Reactive Power Capability of Modular Multilevel Cascade Converter Based STATCOMs for Offshore Wind Farm", IEEE TRANSACTIONS ON POWER ELECTRONICS, INSTITUTE OF ELECTRICAL AND ELECTRONICS ENGINEERS, USA, vol. 34, no. 6, 1 June 2019 (2019-06-01), pages 5147-5164, XP011721368, ISSN: 0885-8993, DOI: 10.1109/TPEL.2018.2866398 [retrieved on 2019-04-22]**

• **TANAKA TAKAAKI ET AL: "Asymmetrical Reactive Power Capability of Modular Multilevel Cascade Converter Based STATCOMs for Offshore Wind Farm", IEEE TRANSACTIONS ON POWER ELECTRONICS, INSTITUTE OF ELECTRICAL AND ELECTRONICS ENGINEERS,**

**Description**

The invention is related to the energy storage and semiconductor related selection of cells of modular multilevel power converters which comprises in each of one or multiple converter branches a plurality of cells which are connected in series, wherein each cell is repeatedly switched within regular or irregular time intervals into an inserted state, in which the cell is actively inserted in the converter branch, or a bypassed state, in which the cell is inactive. The invention is further related to a computer program with program code, arranged for the execution of such a method, and a modular multilevel power converter wherein such control method is embodied.

One of the most popular modular topologies is the modular multilevel converter (MMC), in which the invention can be embedded. The MMC can be configured in single and double star configuration where different topologies can be used for the different cells. Particularly, in DC grids, the MMC has become a very attractive solution (billion market), enabling scalability to different voltage levels, full controllability, and can achieve very high efficiencies at very low switching frequencies. For proper voltage generation, classical multilevel modulation approaches can be applied, providing the switching states, required in the different branches. For the final selection among the different cells in each branch, decoupled sorting algorithms are commonly applied. In this way, each switching operation is effectively used to balance the charging states between the cells. Particularly at low switching frequency operation or at low power factor, which could occur in the case of low-voltage ride through and of reactive power injection, conventional selection methods are no more effective. On the other hand, parameter tolerances (semiconductors, energy storage components) due to manufacturing and aging can cause imbalances in the system. A proposal for optimizing the selection of the cells of such a power converter is given in the publication of F. Hahn, M. Andresen, G. Buticchi and M. Liserre, "Thermal Analysis and Balancing for Modular Multilevel Converters in HVDC Applications", published in IEEE Transactions on Power Electronics, Vol. 33, No. 3, pp. 1985-1996, March 2018. In this publication, the selection of converter cells is based on the optimization of cost functions which comprise terms related to junction temperatures of the semiconductor components of the converter cells. In the publication of F. Hahn, M. Andresen and M. Liserre, "Enhanced Current Capability for Modular Multilevel Converters by a Combined Sorting Algorithm for Capacitor Voltages and Semiconductor Losses", published in IEE Applied Power Electronics Conference and Exposition (APEC), pp. 3071-3077, 17 March 2019, it is proposed to select converter cells based on the optimization of cost functions which comprise terms related to the power dissipation in semiconductor components of the converter cells.

WO 2018/099564 A1 discloses a method of cell selection in modular multilevel converters. US 2015/0171726 A1 discloses the controlling of a modular converter.

It is an object of the present invention to further improve the selection of the cells of a converter branch which goes beyond the suggestions already given in the aforementioned paper.

The object of the invention is achieved by a method for the energy storage and semiconductor related selection of cells according claim 1. The method comprises that each cell is repeatedly switched within regular or irregular time intervals into an inserted state, in which the cell is actively inserted in the converter branch, or a bypassed state, in which the cell is inactive in the converter branch, wherein at least one strain parameter of an energy storage component of each of the cells, which is not the energy storage state or a quantity which characterizes the energy storage state of the energy storage component, is balanced among the cells of a converter branch by generating signals for commanding either the inserted state or the bypassed state for each cell of the converter branch by means of a strain parameter balancing algorithm. Balancing means that the parameter which is subject to the balancing is equalized among the cells of the converter branch as good as possible. The energy storage state or a quantity which characterizes such state can be the actual voltage of the energy storage component.

The cells normally comprise, besides power semiconductors like transistors and diodes at least one energy storage component, like a capacitor, a battery or a circuitry comprising capacitors and/or batteries. No one ever recognized the importance of treating the energy storage components of the cells with care by proper selection of cells, in order to preserve their function for a long lifetime, although common modular multilevel power converters provide a huge number of possible switching states, linked to a high degree of freedom for improved reliability of the cells. The reliability of such energy storage components is at least of the same importance as the reliability of the power semiconductor components, because a defective energy storage device also results in a loss of function or a failure of a cell. As a solution for this problem, the present invention proposes to balance the strain imposed on the energy storage components among the cells of a converter branch by intervening in the modulator which generates the signals for commanding either the inserted state or the bypassed state of a cell. As a result, the strain (or stress or other type of untypical load) of the energy storage component is balanced among the cells of a converter branch.

A converter branch of the modular multilevel power converter, is the circuitry comprising one series connection of a plurality of cells. A cell typically comprises electronic switching circuitry, normally in the form of power semiconductor switches, and at least one energy storage component. The power semiconductor switches can be arranged to different topologies, e.g. half-bridge cells (chopper cells) and/or full-bridge cells (H-bridge).

Through the invention the strain among the electrical storage components of a converter branch is homogenized, which results in a reduced maximum strain of each single energy storage component. As a result, the lifetime of all cells are equalized, preventing premature failures, extending the lifetime of each converter branch. Furthermore, each single energy storage can be designed more economically and space-saving, being crucial especially for medium and high power applications.

According to the invention, the charging state of the energy storage component of the cells is balanced among the cells of a converter branch by generating signals for commanding either the inserted state or the bypassed state for each cell of the converter branch by means of an energy storage state balancing algorithm. In this way the invention of balancing the strain of the energy storage components among the converter branch can be combined with a standard sorting algorithm for balancing the charging state of the energy storage components of the cells within a converter branch. This allows for optimizing the selection of the cells as a compromise between a balanced charging state of the energy storage components and a balanced strain parameter of the energy storage components.

According to the invention, the energy storage balancing algorithm can be a subordinate algorithm which is supervised by the strain parameter balancing algorithm.

Two main types of failures have to be considered for energy storage elements. First, catastrophic failures, which lead to immediate short-circuit or open-circuit breakdown of the energy storage element and second, permanent stress related failures that don't cause instantaneous interruption of the functionality but affect the lifetime of the capacitors due to steady, substantial change in essential operation characteristics, among others equivalent series resistance, capacitance, leakage current or hot-spot temperature. Lifetime-critical strain parameters are among others operational temperature, ripple current flow in conduction state, steady-state voltage, humidity and mechanical stress. The influence of these lifetime-related strain parameters can be represented with mathematical models allowing for optimization algorithms with the goal to decrease the failure probability by reducing one or a combination of multiple strain parameters. These mathematical models can be obtained with only existing sensors.

According to the invention, the at least one strain parameter of the energy storage component is the electrical power dissipation loss of the energy storage component, the equivalent series resistance and the thermal impedance of the energy storage component, the storage capacitance of the energy storage component and/or the hot-spot temperature of the energy storage component of the cell. This allows for balancing one or more of the most important strain parameters of the energy storage component. It is possible that not only one of the strain parameters is balanced by the strain parameter balancing algorithm, but also a combination of several of such strain parameters is included in the balancing algorithm.

According to the invention, the generation of the signals for commanding the inserted state or the bypassed state is performed using a cost function which is individually calculated for each of the cells, wherein the cost function has as input variables a measured charging state of the energy storage component of the cell and at least one actual strain parameter of the energy storage component of the cell, which is calculated and/or measured, wherein the signals for commanding the inserted state or the bypassed state are generated by minimizing the cost function of the corresponding cell. This allows for easy and efficient implementation of the strain parameter balancing function within the strain parameter balancing algorithm. This keeps the required computing power for realizing the algorithm relatively low.

Generally speaking, a cost function can be the sum of several individual terms which are each weighted by using individual weighting factors for each term (e.g. linear combination) wherein each term comprises the difference between an input variable of the cost function and the corresponding minimum or maximum value of this variable among the cells of the converter branch.

According to an advantageous embodiment of the invention, it is proposed that a further input variable of the cost function is the minimum or the maximum of the charging state of the energy storage component of all cells of the converter branch. This further allows for easy and efficient calculation of the cost functions. In particular, this makes it easy to combine the balancing algorithm for the charging states with the strain parameter balancing algorithm.

Besides the energy storage components, the semiconductor devices are most often affected by failures in practical systems. In particular, the maximum chip temperature needs to be limited within a specific operation range to avoid premature failures. In addition to this, thermal cycles cause mechanical tension between the different materials in semiconductor devices. These mechanical tensions can lead to significantly reduced device lifetimes. Therefore, the chip temperature of the devices can be seen as one of the most important and most crucial strain parameter.

The temperatures can be estimated by existing current sensors and thermal models (usually provided by manufacturers) to avoid the usage of any additional sensor. The heating of the devices is especially driven by the power losses, which can be approximated for each device by conduction times, number of commutations and the current through the devices. Accordingly, also by the usage of strain parameters as power losses, conduction times and number of commutations it is possible to limit the computation effort and the length of the computer program.

According to the invention a further input variable of the cost function is at least one strain parameter of a power semiconductor component of the cell. By such means the inventive method can be extended to a balancing of a strain parameter of a power semiconductor component, such that the lifetime of the power semiconductor components can be prolonged. It is particular advantageous to include the strain parameter of the power semiconductor component within the same cost function, which allows for an easy and efficient combination of this approach with the inventive approach of balancing the charging state of the energy storage components of a converter branch. The power semiconductor component can be e.g. a transistor and/or diode.

According to an advantageous embodiment of the invention, it is proposed that the at least one strain parameter of the power semiconductor component is the electrical power dissipation loss and/or the temperature and/or the cumulated stress and/or the expected lifetime of the power semiconductor component. By such means, one or more of the most important strain parameters of power semiconductor components can be integrated in the balancing algorithm, which results in an optimization of the lifetime of the power semiconductor components.

According to the invention, several strain parameters of the energy storage component and the power semiconductor component are weighted within the cost function using individual weighting factors for each strain parameter. This allows for optimization of the balancing algorithm according to component specifications of the component manufacturer, like the manufacturer of the energy storage component and/or the power semiconductor component. For example, if a specific strain parameter of a power semiconductor component (e.g. junction temperature) is less critical for the lifetime of the power semiconductor component compared to a specific strain parameter of the electrical storage component, the weighting factor for the strain parameter of the power semiconductor component can be reduced in relation to the weighting factor for the strain parameter of the electrical storage component. Furthermore, the condition monitoring can act on parameter variability among cells (e. g. capacitances) or in the thermal impedances of energy storage components / semiconductors due to manufacturing processes and aging.

According to the invention, the weighting factors are adaptively modified during the runtime of the modular multilevel power converter depending on lifetime estimations of a component of the cell associated with the weighting factor, such that the end of the lifespan of the component associated with the weighting factor is postponed. The lifetime estimations can be performed using lifetime models which are available for the customary electrical components like the energy storage components and power semiconductor components from their manufacturers. This allows for an adaptive optimization of the lifetime of the components of the cells, such that the resulting lifetime of the cells of a converter branch can be balanced to its maximum. This reduces efforts for repair and maintenance of such modular multilevel power converters.

The object of the invention is also achieved by a computer program with program code, arranged for execution of a method of the aforementioned kind, if the program code is executed on a computer. By such computer program the same advantages can be realized as mentioned above.

The object of the invention is achieved by modular multilevel power converter, which comprises in each of one or multiple converter branches a plurality of cells which are connected in series, and with at least one management unit, which is arranged for generating signals for commanding either the inserted state or the bypassed state for each cell of at least one converter branch, wherein the management unit comprises at least a computer and a memory component, wherein a computer program is stored in the memory component, which is arranged for execution of a method of the aforementioned kind, if the program code of the computer program is executed on the computer. By such modular multilevel power converter the same advantages can be realized as mentioned above.

The computer can be any commercially available computer, like a PC, Laptop, Notebook, Tablet or Smartphone, or a microprocessor, microcontroller or FPGA, or a combination of such elements.

As a result, the invention allows for designing the energy storage components and the semiconductor components of the cells smaller and less expensive. Not only the chip area of semiconductors and dimensions of capacitors can be reduced, but also the related cooling systems since the maximum strain of each single component can be reduced. Due to the high number of cells in a typical modular multilevel power converter the possible savings are significant.

In addition, the operational costs of modular multilevel power converters can be reduced, because a failure of any cell is significantly delayed due to the balancing of the strain parameters of the cells. This allows for extending service intervals of the modular multilevel power converter. This is particularly advantageous in case of decentralized location of the power converter or power converters at locations which are difficult to reach, for example in offshore applications.

The present invention can be applied to any type of modular multilevel power converter comprising at least one converter branch with a plurality of cells. Since the selection methods are decoupled from the modulator, the invention can be applied to all classical modulation techniques as nearest level modulation, tolerance band modulation and carrier-based pulse-width modulation. Further, the present invention does not negatively influence the efficiency of the electrical power conversion of the power converter if the weighting factor is properly tuned.

The invention is further described on the basis of exemplary embodiments using drawings. The drawings show:

Figure 1    a modular multilevel power converter and

Figure 2    current paths in a cell and

Figure 3    a flow chart of a combined strain parameter balancing algorithm and energy storage charging state balancing algorithm.

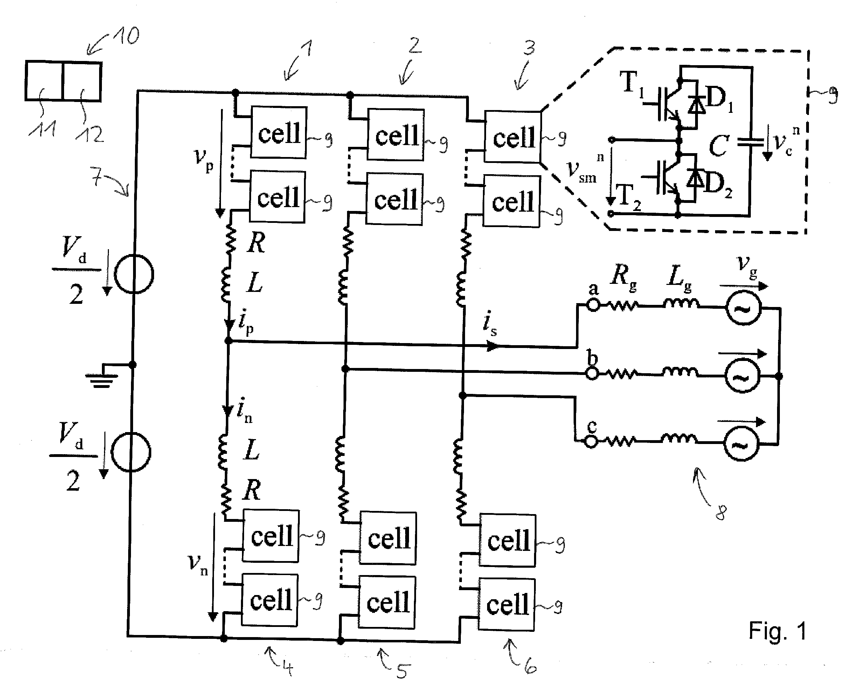

An exemplary embodiment of a modular multilevel power converter is shown in figure 1 in the form of a three-phase MMC in double-star connection. However, the present invention applies to any configuration of a modular multilevel power converter with any number of converter branches, beginning with 1 converter branch to n branches, where n can be any natural number.

The modular multilevel power converter shown in figure 1 comprises six converter branches 1, 2, 3, 4, 5, 6. A converter branch 1, 2, 3, 4, 5, 6 each comprises a plurality of series-connected cells 9. The cells 9 can be designed as chopper cells. As can be seen in figure 1, a cell can comprise a circuit where two transistors $T_1$, $T_2$ are connected in series, wherein a diode $D_1$, $D_2$ is connected in anti-parallel to each transistor $T_1$, $T_2$. Further, an energy storage component C in the form of a capacitor is connected in parallel to the series connection of the transistors $T_1$, $T_2$.

Using the power converter configuration of figure 1, it is possible to convert electrical power from a primary electrical supply network 7 into a secondary electrical supply network 8, or in the opposite direction. For example, the primary electrical supply network 7 can be a direct current network, the secondary electrical supply network 8 can be a three-phase alternating current network.

Figure 1 further shows a management unit 10 for managing or generating the signals for commanding either the inserted state or the bypassed state for each cell of a converter branch. The management unit 10 comprises a computer 11 and a memory component 12. In the memory component 12 a computer program is stored. The computer program comprises a program code. If the program code is executed by the computer 11, a method of the invention is executed.

The modular multilevel power converter may comprise one management unit 10 which manages all of the converter branches 1, 2, 3, 4, 5, 6 or only one converter branch or a subset of the converter branches. In the latter cases the modular multilevel power converter may comprise several management units 10.

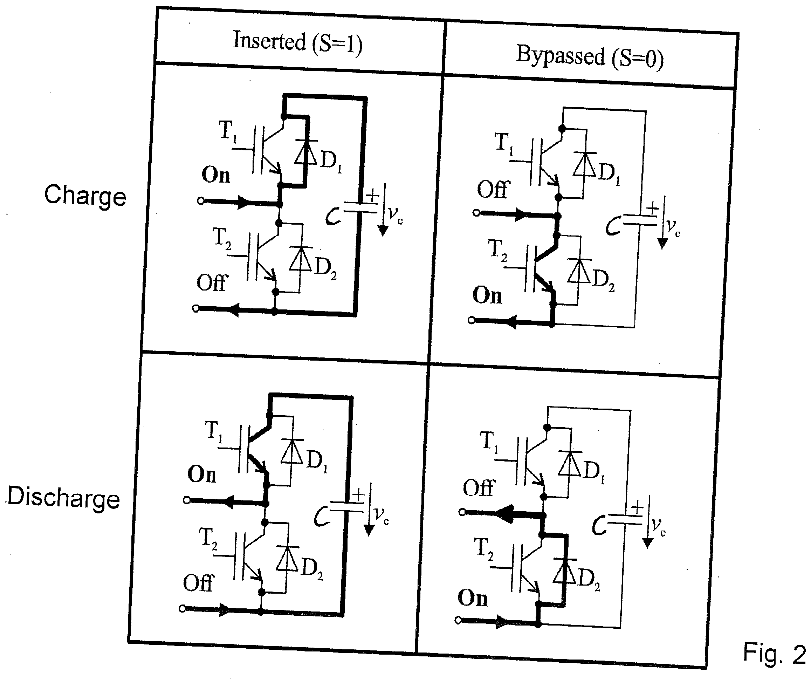

Figure 2 shows the current paths in the cells 9 during normal operation. A cell can be in the inserted state or in the bypassed state. In the bypassed state the cell is excluded from the power conversion function of a converter branch, which means that the energy storage component C of the cell is separated from the series connection of the cells. In the inserted states the cell actively participates in the power conversion function of a converter branch. In this state, the energy storage component C is connected within the series connection of the cells.

Further, depending on the direction of the flow of the electrical current through the energy storage component C the cell can be in a charge mode or a discharge mode. In the charge mode the energy storage component C accumulates electrical energy, which results in an increase of the charging state of the energy storage component C. In the discharge mode accumulated electrical energy is drawn from the energy storage component C, such that the charging state of the energy storage component is reduced.

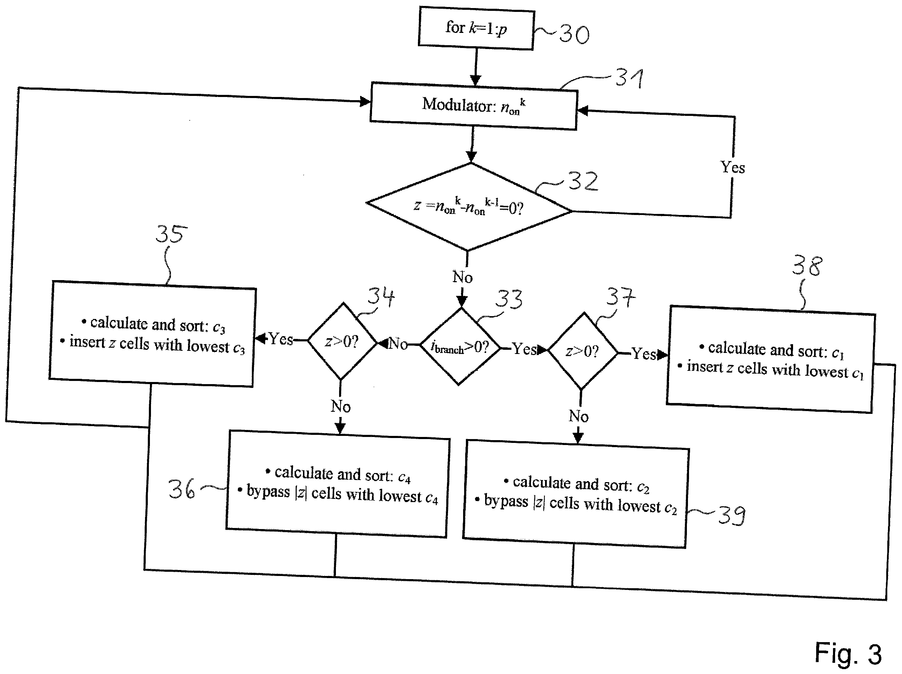

Depending upon the charge mode or the discharge mode corresponding signals for commanding the inserted state or the bypassed state of a cell need to be generated. For this purpose, the algorithm according to figure 3 is proposed.

The algorithm begins with a block 30 which simply says that the following blocks are repeatedly executed in the manner of an endless loop. In block 31 the modulator for executing the power conversion function of a converter branch is performed. The aim of the modulator function is to synthesize the desired actual total voltage of a converter branch, namely the voltage $v_p$, $v_n$ across the series connection of all cells 9 of a converter branch. In case of alternating current the modulator function synthesizes a sinusoidal voltage over time Advanced methods as zero-sequence injection can be used in addition to increase the modulation range of the converter. The modulator in block 31 outputs the number of cells of a converter branch which shall be in the inserted state.

The algorithm continues after block 31 in decision block 32. In decision block 32 a temporary variable z is generated as binary result of a comparison of the number of inserted cells of a converter branch in the inserted state in the current cycle (k) of the loop compared with the number of modules in the inserted state in the previous cycle (k-1) of the loop. If the number of cells in the inserted state remains the same from the previous cycle to the current cycle (then the difference is zero), then variable z is set to 0. Otherwise, z is unequal to 0.

Therefore, if z is unequal to 0, then the number of cells needs to be increased or decreased by the corresponding value. If z=0, the number of inserted cells remains the same.

The algorithm continues after decision block 32 in decision block 33. In decision block 33 it is checked whether the converter branch is currently in the charge mode or in the discharge mode. This is checked by verifying the sign of the current $i_{branch}$ in the converter branch.

In case the current is positive, then the converter branch and each of the cells in the converter branch is in the charge mode. The program then continues with decision block 37. In decision block 37 it is checked whether the variable z is greater than 0. In such case the algorithm continues with block 38. Otherwise the algorithm continues with block 39.

In case the current $i_{branch}$ is 0 or less than 0, then the converter branch and each of the cells in the converter branch is in the discharge mode. The program then continues with decision block 34. In decision block 34 it is checked whether z is greater than 0. In such case the algorithm continues with block 35, otherwise the algorithm continues with block 36.

In the blocks 35, 36, 38, 39 similar calculation steps are executed, but based on different input variables and

different cost functions $c_1$, $c_2$, $c_3$, $c_4$. Therefore, depending on the charge or discharge mode of a cell and the need of increasing or decreasing the number of inserted cells, different input variables and different cost functions can be applied, which will be explained hereinafter.

In blocks 35 and 38 the steps of calculating and sorting are performed, based on a cost function $c_1$ or $c_3$. As a result, signals for generating commands for switching one or several cells in the inserted state are generated based upon the minimum of the cost function $c_1$, $c_3$. The minimum occurring cost function values in each branch can be determined by sorting all values or by sorting all values as far as possible to limit the computation time.

Similarly, in blocks 36, 39 the steps of calculating and sorting are performed, based on a cost function $c_2$ or $c_4$. As a result, signals for generating commands for switching a cell in the bypassed state are generated based upon the minimum of cost functions $c_2$, $c_4$.

The algorithm proceeds after each of the steps 35, 36, 38, 39 again with block 31.

In a basic approach, the cost functions $c_1$, $c_2$, $c_3$, $c_4$ for each cell can be defined as follows:

$$c_1 = v_c - v_{c,\min} \qquad (1)$$

$$c_2 = v_{c,\max} - v_c \qquad (2)$$

$$c_3 = v_{c,\max} - v_c \qquad (3)$$

$$c_4 = v_c - v_{c,\min} \qquad (4)$$

The charging state $v_c$ of the energy storage element C of a cell 9 can be assessed, for example, by its voltage state. The cost functions $c_1$, $c_2$, $c_3$, $c_4$ are established separately for each cell 9 of a converter branch. The value $v_{c,\min}$ is the smallest value of all charging states $v_c$ of the cells of a converter branch. The value $v_{c,\max}$ is the highest value of all charging states $v_c$ of the cells of the converter branch. The aforementioned basic approach for the cost functions enables for an easy implementation of an energy storage balancing algorithm, as mentioned before.

With regard to the algorithm of figure 3, in block 38 the calculation and sorting step and the assignment of the signals for commanding the inserted state or the bypassed state can be done by seeking the minimum of all $c_1$ values of the cells of a converter branch. In block 39 the calculation and sorting step and the step of generating a signal for commanding the inserted state or the bypassed state can be done by seeking the minimum of all $c_2$ values of the cells of a converter branch. In block 35 the calculation and sorting step and the step of generating a signal for commanding the inserted state or the bypassed state can be done by seeking the minimum of all $c_3$ values of the cells of a converter branch. In block 36 the calculation and sorting step and the step of generating a signal for commanding the inserted state or the bypassed state can be done by seeking the minimum of all $c_4$ values of the cells of a converter branch.

In case of blocks 35, 38, this results in a signal for commanding the cells which corresponds to the minimum cost function to be switched in the inserted state. In case of blocks 36, 39 it results in a signal for commanding the cell which corresponds to the minimum cost function to be switched in the bypassed state.

For balancing the strain parameter of the energy storage component of the cells further input variables can be implemented in the cost functions $c_1$, $c_2$, $c_3$, $c_4$, for example as follows:

$$c_1 = \left(v_c - v_{c,\min}\right) + \alpha_{1,A}\left(P_c - P_{c,\min}\right) \qquad (5)$$

$$c_2 = \left(v_{c,\max} - v_c\right) + \alpha_{2,A}\left(P_{c,\max} - P_c\right) \qquad (6)$$

$$c_3 = \left(v_{c,\max} - v_c\right) + \alpha_{3,A}\left(P_{c,\max} - P_c\right) \qquad (7)$$

$$c_4 = \left(v_c - v_{c,\min}\right) + \alpha_{4,A}\left(P_c - P_{c,\min}\right) \qquad (8)$$

Herein $P_c$ is an example for a strain parameter, e.g. the electrical power dissipation loss of the energy storage component C of a cell 9. $P_{c,\min}$ is the smallest value of the $P_c$ values of all cells of the converter branch. $P_{c,\max}$ is the highest value of all $P_c$ values of the cells of the converter branch. $\alpha_{1,A}$, $\alpha_{2,A}$, $\alpha_{3,A}$ and $\alpha_{4,A}$ are weighting factors which are used for weighting the strain parameters in the cost functions. The $\alpha$ factors can be chosen individually for the cost functions.

In a practical embodiment, the electrical power dissipation loss of the energy storage component C can be measured by using measured current or voltage of the energy storage element. Both, the current through each branch and the charging state of each energy storage element are measured for proper control of the system. Consequently, the invention doesn't require any additional sensor effort. The measurement can be performed over a defined time frame such that an average value of the electrical power dissipation loss can be calculated over this time frame. The electrical power dissipation loss $P_c$ can be approximated by the integral of the square of the charging current of the energy storage component, and by assuming a proportional characteristic of such calculated value to the electrical loss resistance of the energy storage component. For further improving the calculation of the electrical power dissipation loss $P_c$, the frequency dependence of the electrical loss resistance of the energy storage component can be included, by also taking into account the harmonic spectra of the energy storage current.

However, the electrical loss resistance values of the energy storage components could vary among different production processes and over the lifetime of the component, which could increase the unbalanced strain of the energy storage components among the cells of a converter branch. As a further improvement it is proposed that the actual value of the electrical loss resistance of an energy storage component is repeatedly determined, e.g. during runtime of the modular multilevel power converter, and is then used in the procedure as described before. By recognizing these individual and variable values of the electrical loss resistance of the energy storage components the balancing of the strain parameter of the energy storage components can be further optimized.

Another strain parameter of the energy storage component which could be included as an input variable in the method of the invention is the temperature of the energy storage component. The temperature could be measured by a temperature sensor. Alternatively, the temperature of the energy storage component could be calculated based upon a thermodynamic model of the energy storage component and its integration in the cell, and using the electrical power dissipation loss $P_c$ of the energy storage component. If the temperature of the energy storage component is used for balancing the strain parameter, the cost functions could be established as follows.

$$c_1 = \left(v_c - v_{c,\min}\right) + \alpha_{1,B}\left(T_c - T_{c,\min}\right) \qquad (5)$$

$$c_2 = \left(v_{c,\max} - v_c\right) + \alpha_{2,B}\left(T_{c,\max} - T_c\right) \qquad (6)$$

$$c_3 = \left(v_{c,\max} - v_c\right) + \alpha_{3,B}\left(T_{c,\max} - T_c\right) \qquad (7)$$

$$c_4 = \left(v_c - v_{c,\min}\right) + \alpha_{4,B}\left(T_c - T_{c,\min}\right) \qquad (8)$$

$T_c$ is the actual (estimated or measured) temperature of the energy storage component. $T_{c,\min}$ is the lowest value of all $T_c$ values of the energy storage components of the cells of a converter branch. $T_{c,\max}$ is the highest value of all $T_c$ values. $\alpha_{1,B}$, $\alpha_{2,B}$, $\alpha_{3,B}$, $\alpha_{4,B}$ are further weighting factors.

A further possible input variable of the cost functions can be one or more strain parameters of semiconductor components of the cells, like the electrical power dissipation loss and/or the temperature of the power semiconductor component. The following example shows cost functions which include the electrical power dissipation loss of the semiconductor component:

$$c_1 = \left(v_c - v_{c,\min}\right) + \alpha_{1,C}\left(P_c - P_{c,\min}\right) + \beta_1\left(P_{v,\max,D1} - P_{v,D1}\right) \qquad (9)$$

$$c_2 = \left(v_{c,\max} - v_c\right) + \alpha_{2,C}\left(P_{c,\max} - P_c\right) + \beta_2\left(P_{v,\max,T2} - P_{v,T2}\right) \qquad (10)$$

$$c_3 = \left(v_{c,\max} - v_c\right) + \alpha_{3,C}\left(P_{c,\max} - P_c\right) + \beta_3\left(P_{v,\max,T1} - P_{v,T1}\right) \qquad (11)$$

$$c_4 = \left(v_c - v_{c,\min}\right) + \alpha_{4,C}\left(P_c - P_{c,\min}\right) + \beta_4\left(P_{v,\max,D2} - P_{c,D2}\right) \qquad (12)$$

In these functions $P_{v,D1}$ is the electrical power dissipation loss of diode $D_1$. $P_{v,T2}$ is the electrical power dissipation loss of transistor $T_2$ $P_{v,T1}$ is the electrical power dissipation loss of transistor $T_1$. $P_{v,D2}$ is the electrical power dissipation loss of diode $D_2$. $P_{v,max,D1}$, $P_{v,max,T2}$, $P_{v,max,T1}$ and $P_{v,max,D2}$ are the corresponding maximum values across the cells of the converter branch. $\beta_1$, $\beta_2$, $\beta_3$ and $\beta_4$ are further weighting factors for the strain parameters.

Through appropriate choice and optimization of the weighting factors $\alpha$ and $\beta$ it is possible to balance the strain of the energy storage component and the power semiconductor components among the cells of a converter branch and within a cell.

A further strain parameter of the energy storage component which can be incorporated in the cost functions is the storage capacity. The actual value of the storage capacity is another important factor which may result in an unbalanced stress of the cells and their energy storage components. The reason for such unbalanced strain may be unavoidable tolerances in the storage capacity, due to manufacturing and aging processes. Differences in the storage capacities of the energy storage component of the series connection of the cells result in differences in the charging times. According to a further embodiment of the invention, it is proposed to determine the actual storage capacity of the energy storage component of a cell during runtime of the modular multilevel power converter. The actual value of the energy storage capacity can be determined for example by integrating the charging current or discharging current over the times of the inserted state of the cell. The determined actual storage capacity of the energy storage component can be included in the cost functions, for example, by using the energy storage capacity or its reciprocal value as weighting factor in the cost function, for example as weighting factor for the input variable energy storage charging state, or by dividing another weighting factor of the energy storage charging state by this energy storage capacity.

**Claims**

1. Method for the energy storage and semiconductor related selection of cells (9) of a modular multilevel power converter, which comprises in each of one or multiple converter branches (1, 2, 3, 4, 5, 6) a plurality of cells (9) which are connected in series, wherein each cell (9) is repeatedly switched within regular or irregular time intervals into an inserted state, in which the cell (9) is actively inserted in the converter branch (1, 2, 3, 4, 5, 6), or a bypassed state, in which the cell (9) is inactive, wherein the charging state of the energy storage component (C) of the cells (9) is balanced among the cells (9) of a converter branch (1, 2, 3, 4, 5, 6) by generating signals for commanding either the inserted state or the bypassed state for each cell (9) of the converter branch (1, 2, 3, 4, 5, 6) by means of an energy storage charging state balancing algorithm, wherein at least one strain parameter of an energy storage component (C) of each of the cells (9), which is not the charging state or a quantity which characterizes the charging state of the energy storage component (C), is balanced among the cells (9) of a converter branch (1, 2, 3, 4, 5, 6) by generating signals for commanding either the inserted state or the bypassed state for each cell (9) of the converter branch (1, 2, 3, 4, 5, 6) by means of a strain parameter balancing algorithm, wherein the at least one strain parameter of the energy storage component (C) is the electrical power dissipation loss of the energy storage component (C), the equivalent series resistance and the thermal impedance of the energy storage component, the storage capacity of the energy storage component and/or the hot-spot temperature of the energy storage component (C) of the cell (9), wherein the generation of the signals for commanding the inserted state or the bypassed state is performed using a cost function ($c_1$, $c_2$, $c_3$, $c_4$) which is individually calculated for each of the cells (9), wherein the cost function ($c_1$, $c_2$, $c_3$, $c_4$) has as input variables a measured charging state of the energy storage component (C) of the cell (9) and at least one actual strain parameter of the energy storage component (C) of the cell (9), which is calculated and/or measured, wherein a further input variable of the cost function ($c_1$, $c_2$, $c_3$, $c_4$) is at least one strain parameter of a power semiconductor component ($T_1$, $T_2$, $D_1$, $D_2$) of the cell (9), wherein the signals for commanding the inserted state or the bypassed state are generated by minimizing the cost function ($c_1$, $c_2$, $c_3$, $c_4$) of the corresponding cell (9), wherein several strain parameters of the energy storage component (C) and the power semiconductor component ($T_1$, $T_2$, $D_1$, $D_2$) are weighted within the cost function ($c_1$, $c_2$, $c_3$, $c_4$) using individual weighting factors for each strain parameter, wherein the weighting factors are adaptively modified during the runtime of the modular multilevel power converter depending on lifetime estimations of a component (C, $T_1$, $T_2$, $D_1$, $D_2$) of the cell (9) associated with the weighting factor, such that the end of the lifespan of the component (C, $T_1$, $T_2$, $D_1$, $D_2$) associated with the weighting factor is postponed.

2. Method according to claim 1, **characterized in that** a further input variable of the cost function ($c_1$, $c_2$, $c_3$, $c_4$) is the minimum or the maximum of the charging state of the energy storage component (C) of all cells (9) of the converter branch (1, 2, 3, 4, 5, 6).

3. Method according to claim 1, **characterized in that** the at least one strain parameter of the power semiconductor component ($T_1$, $T_2$, $D_1$, $D_2$) is the electrical power dissipation loss averaged over a specific time and/or the temperature and/or the cumulated stress and/or the expected lifetime of the power semiconductor component ($T_1$, $T_2$, $D_1$, $D_2$).

4. Computer program comprising program code which, when the program code is executed on a computer (11) of a modular multilevel power converter, cause the modular multilevel power converter to carry out a method of any of the preceding claims.

5. Modular multilevel power converter, which comprises in each of one or multiple converter branches (1, 2, 3, 4, 5, 6) a plurality of cells (9) which are connected in series, and with at least one management unit (10), which is arranged for generating signals for commanding either the inserted state or the bypassed state for each cell (9) of at least one converter branch (1, 2, 3, 4, 5, 6), wherein the management unit (10) comprises at least a computer (11) and a memory component (12), wherein a computer program is stored in the memory component (12), which is arranged for execution of a method according to any of claims 1 to 3, if the program code of the computer program is executed on the computer (11).

**Patentansprüche**

1. Verfahren für die Energiespeicher- und Halbleiter-bezogene Auswahl von Zellen (9) eines modularen Multilevel-Stromrichters, der in jedem von einem oder mehreren Stromrichterzweigen (1, 2, 3, 4, 5, 6) eine Mehrzahl von Zellen (9) aufweist, die in Reihe geschaltet sind, wobei jede Zelle (9) innerhalb regelmäßigen oder unregelmäßigen Zeitabständen wiederholt in einen eingefügten Zustand geschaltet wird, in dem die Zelle (9) aktiv in den Stromrichterzweig (1, 2, 3, 4, 5, 6) eingefügt ist, oder einen Bypass-Zustand, in dem die Zelle (9) inaktiv ist, wobei der Ladezustand der Energiespeicherkomponente (C) der Zellen (9) zwischen den Zellen (9) eines Stromrichterzweigs (1, 2, 3, 4, 5, 6) ausgeglichen wird, indem Signale zum Befehlen entweder des eingefügten Zustands oder des Bypass-Zustands für jede Zelle (9) des Stromrichterzweigs (1, 2, 3, 4, 5, 6) mittels eines Energiespeicher-Ladezustands-Ausgleichsalgorithmus erzeugt werden, wobei mindestens ein Belastungsparameter einer Energiespeicherkomponente (C) jeder der Zellen (9), der nicht der Ladezustand oder eine den Ladezustand der Energiespeicherkomponente (C) charakterisierende Größe ist, zwischen den Zellen (9) eines Stromrichterzweigs (1, 2, 3, 4, 5, 6) ausgeglichen wird, indem Signale zum Befehlen entweder des eingefügten Zustands oder des Bypass-Zustands für jede Zelle (9) des Stromrichterzweigs (1, 2, 3, 4, 5, 6) mittels eines Belastungs-Ausgleichsalgorithmus erzeugt werden, wobei der mindestens eine Belastungsparameter der Energiespeicherkomponente (C) die elektrische Verlustleistung der Energiespeicherkomponente (C), der äquivalente Serienwiderstand und die thermische Impedanz der Energiespeicherkomponente ist, die Speicherkapazität der Energiespeicherkomponente und/oder die Hot-Spot-Temperatur der Energiespeicherkomponente (C) der Zelle (9) ist, wobei die Generierung der Signale zum Befehlen des eingefügten Zustands oder des Bypass-Zustands unter Verwendung einer Kostenfunktion ($c_1$, $c_2$, $c_3$, $c_4$) erfolgt, die für jede der Zellen (9) individuell berechnet wird, wobei die Kostenfunktion ($c_1$, $c_2$, $c_3$, $c_4$) als Eingangsgrößen einen gemessenen Ladezustand des Energiespeicherbauteils (C) der Zelle (9) und mindestens einen berechneten und/oder gemessenen aktuellen Belastungsparameter des Energiespeicherbauteils (C) der Zelle (9) aufweist, wobei eine weitere Eingangsgröße der Kostenfunktion ($c_1$, $c_2$, $c_3$, $c_4$) mindestens ein Belastungsparameter eines Leistungshalbleiterbauteils ($T_1$, $T_2$, $D_1$, $D_2$) der Zelle (9) ist, wobei die Signale zur Steuerung des eingefügten Zustands oder des Bypass-Zustands durch Minimierung der Kostenfunktion ($c_1$, $c_2$, $c_3$, $c_4$) der entsprechenden Zelle (9) erzeugt werden, wobei mehrere Belastungsparameter des Energiespeicherbauteils (C) und des Leistungshalbleiterbauteils ($T_1$, $T_2$, $D_1$, $D_2$) innerhalb der Kostenfunktion ($c_1$, $c_2$, $c_3$, $c_4$) mit individuellen Gewichtungsfaktoren für jeden Belastungsparameter gewichtet werden, wobei die Gewichtungsfaktoren während der Laufzeit des modularen Multilevel-Stromrichters in Abhängigkeit von Lebensdauerabschätzungen eines dem Gewichtungsfaktor zugeordneten Bauteils (C, $T_1$, $T_2$, $D_1$, $D_2$) der Zelle (9) adaptiv modifiziert werden, so dass das Ende der Lebensdauer des dem Gewichtungsfaktor zugeordneten Bauteils (C, $T_1$, $T_2$, $D_1$, $D_2$) hinausgeschoben wird.

2. Verfahren nach Anspruch 1, **dadurch gekennzeichnet, dass** eine weitere Eingangsgröße der Kostenfunktion ($c_1$, $c_2$, $c_3$, $c_4$) das Minimum oder das Maximum des Ladezustandes der Energiespeicherkomponenten (C) aller Zellen (9) des Stromrichterzweigs (1, 2, 3, 4, 5, 6) ist.

3. Verfahren nach Anspruch 1, **dadurch gekennzeichnet, dass** der mindestens eine Belastungsparameter des Leistungshalbleiterbauelements ($T_1$, $T_2$, $D_1$, $D_2$) die über eine bestimmte Zeit gemittelte elektrische Verlustleistung und/oder die Temperatur und/oder die kumulierte Belastung und/oder die erwartete Lebensdauer des Leistungshalbleiterbauelements ($T_1$, $T_2$, $D_1$, $D_2$) ist.

4. Computerprogramm mit Programmcode, der, wenn der Programmcode auf einem Computer (11) eines modularen Multilevel-Stromrichters ausgeführt wird, den modularen Multilevel-Stromrichter veranlasst, ein Verfahren nach einem der vorhergehenden Ansprüche auszuführen.

5. Modularer Multilevel-Stromrichter, der in jedem von einem oder mehreren Stromrichterzweigen (1, 2, 3, 4, 5, 6) eine Mehrzahl von Zellen (9) aufweist, die in Reihe geschaltet sind, und mit mindestens einer Verwaltungseinheit (10), die dazu eingerichtet ist, für jede Zelle (9) mindestens eines Stromrichterzweiges (1, 2, 3, 4, 5, 6) Signale zur Steuerung entweder des eingeschalteten Zustandes oder des Bypass-Zustands zu erzeugen, wobei die Verwaltungseinheit (10) mindestens einen Computer (11) und eine Speicherkomponente (12) umfasst, wobei in der Speicherkomponente (12) ein Computerprogramm gespeichert ist, das zur Ausführung eines Verfahrens nach einem der Ansprüche 1 bis 3 eingerichtet ist, wenn der Programmcode des Computerprogramms auf dem Computer (11) ausgeführt wird.

**Revendications**

1. Procédé de sélection de cellules (9) d'un convertisseur de puissance modulaire multiniveau en fonction d'un stockage d'énergie et d'un semi-conducteur, qui comprend dans chacune d'une de multiples branches de convertisseur (1, 2, 3, 4, 5, 6) une pluralité de cellules (9) qui sont connectées en série, dans lequel chaque cellule (9) est commutée de manière répétitive à l'intérieur d'intervalles temporels réguliers ou irréguliers jusque dans un état d'insertion, dans lequel la cellule (9) est insérée activement dans la branche de convertisseur (1, 2, 3, 4, 5, 6), ou si dans un état de by-pass, dans lequel la cellule (9) est inactive, dans lequel l'état de chargement du composant de stockage d'énergie (C) des cellules (9) est équilibré parmi les cellules (9) d'une branche de convertisseur (1, 2, 3, 4, 5, 6) en générant des signaux pour ordonner soit l'état d'insertion soit l'état de by-pass pour chaque cellule (9) de la branche de convertisseur (1, 2, 3, 4, 5, 6) au moyen d'un algorithme d'équilibrage d'état de chargement de stockage d'énergie, dans lequel
   au moins un paramètre de contrainte d'un composant de stockage d'énergie (C) de chacune des cellules (9) qui n'est pas l'état de chargement ou une quantité qui caractérise d'état de chargement du composant de stockage d'énergie (C), est équilibré parmi les cellules (5) d'une branche de convertisseur (1, 2, 3, 4, 5, 6) en générant des signaux pour ordonner soit l'état d'insertion soit l'état de by-pass pour chaque cellule (9) de la branche de convertisseur (1, 2, 3, 4, 5, 6) au moyen d'un algorithme d'équilibrage de paramètre de contrainte, dans lequel ledit au moins un paramètre de contrainte du composant de stockage d'énergie (C) est la perte par dissipation de puissance électrique du composant de stockage d'énergie (C), la résistance en série équivalente et l'impédance thermique du composant de stockage d'énergie, la capacité de stockage du composant de stockage d'énergie et/ou la température de point chaud du composant de stockage d'énergie (C) de la cellule (9), dans lequel la génération des signaux pour ordonner l'état d'insertion ou l'état de by-pass est effectuée en utilisant une fonction de coût ($C_1$, $C_2$, $C_3$, $C_4$) qui est calculée individuellement pour chacune des cellules (9), dans lequel la fonction de coût ($C_1$, $C_2$, $C_3$, $C_4$) a, en tant que variables d'entrée, un état de chargement mesuré du composant de stockage d'énergie (C) de la cellule (9) et au moins un paramètre de contrainte réel du composant de stockage d'énergie (C) de la cellule (9), qui est calculé/mesuré, dans lequel une variable d'entrée supplémentaire de la fonction de coût ($C_1$, $C_2$, $C_3$, $C_4$) est au moins un paramètre de contrainte d'un composant semi-conducteur de puissance ($T_1$, $T_2$, $D_1$, $D_2$) de la cellule (9), dans lequel les signaux pour ordonner état d'insertion ou l'état de by-pass sont générés en minimisant la fonction de coût ($C_1$, $C_2$, $C_3$, $C_4$) de la cellule correspondante (9), dans lequel plusieurs paramètres de contrainte du composant d'énergie de stockage (C) et du composant semi-conducteur de puissance ($T_1$, $T_2$, $T_3$, $T_4$) sont pondérés à l'intérieur de la fonction de coût ($C_1$, $C_2$, $C_3$, $C_4$) en utilisant des facteurs de pondération individuels pour chaque paramètre de contrainte, dans lequel les facteurs de pondération sont modifiés avec adaptation pendant le temps de fonctionnement du convertisseur de puissance modulaire multiniveau en dépendance d'estimations de cycle de vie d'un composant (C, $T_1$, $T_2$, $D_1$, $D_2$) de la cellule (9) associées au facteur de pondération, de telle sorte que la fin de la durée de vie du composant (C, $T_1$, $T_2$, $D_1$, $D_2$) associée au facteur de pondération est postposée.

2. Procédé selon la revendication 1, **caractérisé en ce qu'**une variable d'entrée supplémentaire de la fonction de coût ($C_1$, $C_2$, $C_3$, $C_4$) est le minimum ou le maximum de l'état de chargement du composant de stockage d'énergie (C) de toutes les cellules (9) de la branche de convertisseur (1, 2, 3, 4, 5, 6).

3. Procédé selon la revendication 1, **caractérisé en ce que** ledit au moins un paramètre de contrainte du composant semi-conducteur de puissance ($T_1$, $T_2$, $D_1$, $D_2$) est la perte par dissipation de puissance électrique moyennée sur une durée spécifique et/ou la température et/ou la tension cumulée et/ou la durée de vie attendue du composant semi-conducteur de puissance ($T_1$, $T_2$, $D_1$, $D_2$).

4. Programme d'ordinateur comprenant un code de programme qui, quand le code programme est exécuté sur un ordinateur (11) d'un convertisseur de puissance modulaire multiniveau, amène le convertisseur de puissance modulaire multiniveau à exécuter un procédé selon l'une quelconque des revendications précédentes.

5. Convertisseur de puissance modulaire multiniveau, qui comprend dans chacune d'une ou de multiples branches de convertisseur (1, 2, 3, 4, 5, 6) une pluralité de cellules (9) qui sont connectées en série, et avec au moins une unité de gestion (10), qui est agencée pour générer des signaux pour ordonner soit l'état insertion soit l'état de by-pass pour chaque cellule (9) d'au moins une branche de convertisseur (1, 2, 3, 4, 5, 6), dans lequel l'unité de gestion (10) comprend au moins un ordinateur (11) et un composant de mémoire (12), dans lequel un programme d'ordinateur est stocké dans le composant de mémoire (12), qui est agencé pour exécuter un procédé selon l'une quelconque des revendications 1 à 3, si le code de programme du programme d'ordinateur est exécuté sur l'ordinateur (11).

Fig. 1

Fig. 2

EP 3 780 376 B1

for $k=1{:}p$ ~30

Modulator: $n_{\text{on}}^{k}$ ~31

$z = n_{\text{on}}^{k} - n_{\text{on}}^{k-1} = 0?$ ~32 — Yes

No

~34 $z>0?$ — Yes

~33 $i_{\text{branch}}>0?$ — Yes

~37 $z>0?$ — Yes

35
• calculate and sort: $c_3$
• insert $z$ cells with lowest $c_3$

38
• calculate and sort: $c_1$
• insert $z$ cells with lowest $c_1$

No

36
• calculate and sort: $c_4$
• bypass $|z|$ cells with lowest $c_4$

No

39
• calculate and sort: $c_2$
• bypass $|z|$ cells with lowest $c_2$

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018099564 A1

- US 20150171726 A1

**Non-patent literature cited in the description**

- **F. HAHN ; M. ANDRESEN ; G. BUTICCHI ; M. LISERRE.** Thermal Analysis and Balancing for Modular Multilevel Converters in HVDC Applications. *IEEE Transactions on Power Electronics,* March 2018, vol. 33 (3), 1985-1996

- **F. HAHN ; M. ANDRESEN ; M. LISERRE.** Enhanced Current Capability for Modular Multilevel Converters by a Combined Sorting Algorithm for Capacitor Voltages and Semiconductor Losses. *IEE Applied Power Electronics Conference and Exposition (APEC),* 17 March 2019, 3071-3077